# EUROPEAN PATENT APPLICATION

(11) **EP 2 977 236 A1**
(43) Date of publication of application: **27.01.2016**
(21) Application number: 14770105.6
(22) Date of filing: 19.03.2014
(51) Int. Cl.: B60C 27/18

(54) **VEHICLE TIRE ANTI-SKID DEVICE**

(30) Priority: 22.03.2013 JP 2013060017
(71) Applicant: Toyo Elastic Weave Co., Ltd., Fukuoka 830-0047 (JP)
(72) Inventor: TOMIYASU, Osamu, Kurume-shi Fukuoka 830-0047 (JP); FURUTA, Yoshihisa, Kurume-shi Fukuoka 830-0047 (JP); BEPPU, Tooru, Kurume-shi Fukuoka 830-0047 (JP); NAGATA, Teiji, Kurume-shi Fukuoka 830-0047 (JP); YANAGIMOTO, Osamu, Kurume-shi Fukuoka 830-0047 (JP); SUGIURA, Masanori, Hamamatsu-shi Shizuoka 431-3107 (JP)
(74) Representative: Henkel, Breuer & Partner
(86) International application number: PCT/JP2014/057510
(87) International publication number: WO 2014/148544

(57) **Abstract**

[Problem] The problem addressed by the present invention is to provide a low-cost vehicle tire anti-skid device.

[Solution] The present invention is provided with the following: an anti-skid part (213); a first side-part (215) that is connected to the anti-skid part (213) and has a first opening (215a); a second side-part (217) that is connected to the anti-skid part (213) and has a second opening (217a); a first elastic band (219) for reducing the diameter of the first opening (215a); a second elastic band (221) for reducing the diameter of the second opening (217a) using a force that is greater than a force of the first elastic band (219); and an inelastic band. The length in the circumferential direction of the anti-skid part (213), in a state where the anti-skid part is not attached to a tire (1), is set so as to be shorter than the circumferential-direction length of a tread (3) of the tire (1), and the anti-skid part is a textile formed by combining a vertical thread that follows the circumferential direction of the tire (1) and has elasticity, and a horizontal thread that follows a width direction of the tire.

## Description

### Technical Field

The present invention relates to an anti-skid device attached to a vehicle tire to increase traction between a vehicle and a road surface under winter conditions.

### Background Art

When an individual drives an automobile on a snowy road or an icy road, it is normal to forestall a skid by changing normal tires to tires that themselves exert an anti-skid effect, such as studded tires and studless tires, or by attaching metal or resin tire chains (anti-skid device to prevent a skid) to the tires.

Also, an anti-skid device proposed recently is to entirely cover a tread of the tire with a textile (see, for example, PTL 1).

### Citation List

### Patent Literature

PTL 1: JP-T-2010-517874 (the term "JP-T" as used herein means a published Japanese translation of a PCT patent application)

### Summary of Invention

### Technical Problems

However, an anti-skid part covering the tread of a tire described in PTL 1 is made of a warp-knitted textile of a triplex structure that has slight elasticity. The disclosed anti-skid device therefore has problems as follows.
(1) The anti-skid part is made of a warp-knitted textile of a triplex structure and a warp-knitting machine that forms the warp-knitted textile is special and not used commonly. Hence, the anti-skid device has a problem that the cost is high.
(2) A length of the anti-skid part when unattached to a tire is set to 85 to 103 percent of the circumference of the tire. However, when the length is over 100 percent, wrinkles are formed in the anti-skid part. The wrinkles are beaten against the road surface while the tire rotates and the anti-skid part becomes brittle.

On the contrary, when the length is less than 100 percent, the anti-skid part does not have sufficient elasticity and ease of attachment of the anti-skid device to the tire and ease of detachment of the anti-skid device from the tire are poor.
(3) The warp-knitted textile of which the anti-skid part is made is of a triplex structure and therefore has a heavy weight per unit area. Meanwhile, a centrifugal force applied to the anti-skid part while the tire rotates is in proportion to a mass of the anti-skid part. Hence, the anti-skid part expands due to the centrifugal force applied to the anti-skid part while the tire rotates and the anti-skid device may possibly come off the tire.

The invention was devised in view of the problems discussed above and has an object to provide a low-cost vehicle tire anti-skid device. Another object of the invention is to provide a vehicle tire anti-skid device that is substantially unbreakable and quite easy to attach to a tire and detach from the tire. Still another object of the invention is to provide a vehicle tire anti-skid device that seldom comes off the tire.

### Solution to Problems

In order to achieve at least one of the objects described above, a vehicle tire anti-skid device that reflects one aspect of the invention has: an anti-skid part that covers a tread of a tire; a first side-part that is provided to the anti-skid part along an edge in a circumferential direction oppositely to an outside side wall of the tire and provided with a first opening at a center; a second side-part that is provided to the anti-skid part along an edge in the circumferential direction oppositely to an inside side wall of the tire and provided with a second opening at a center; a first elastic band that is provided to the first side-part and forces the first opening to reduce a diameter; a second elastic band that is provided to the second side-part and forces the second opening to reduce a diameter with a force greater than a force of the first elastic band; and a strap that runs across the first opening at a center and is connected to the first side-part at both ends. The vehicle tire anti-skid device is characterized in that a length in the circumferential direction of the anti-skid part when unattached to the tire is set to be shorter than a length in the circumferential direction of the tread of the tire, and that the anti-skid part is made of a textile formed by combining a vertical thread that follows the circumferential direction of the tire and has elasticity and a horizontal thread that follows a width direction of the tire.

Other characteristics of the invention will become more apparent from embodiments to implement the invention described below and the accompanying drawings.

### Advantageous Effects of Invention

According to the invention, the anti-skid part is made of a textile formed by combining the vertical thread that follows the circumferential direction of the tire and the horizontal thread that follows the width direction of the tire. The anti-skid part can be therefore formed using a commonly-used knitting machine. Hence, the cost can be lower.

Also, the circumferential-direction length of the anti-skid part when unattached to the tire is set to be shorter than the circumferential-direction length of the tread of the tire. Hence, no wrinkles are formed in the anti-skid part and the anti-skid part does not break due to wrinkles that are beaten against the road surface while the tire rotates. The anti-skid part is made of a textile formed by combining the vertical thread that follows the circumferential direction of the tire and has elasticity and the horizontal thread that follows the width direction of the tire. Hence, by setting the elasticity of the vertical thread adequately, the anti-skid device can be quite easy to attach to the tire and detach from the tire.

Further, the anti-skid part is made of a textile formed by combining the vertical thread that has elasticity and the horizontal thread that follows the width direction of the tire. Accordingly, the structure is simple and a mass per unit area is low. Hence, the anti-skid part hardly expands due to a centrifugal force applied to the anti-skid part while the tire rotates and the anti-skid device seldom comes off the tire.

The anti-skid device has the first elastic band that is provided to the first side-part and forces the first opening to reduce the diameter and the second elastic band that is provided to the second side-part and forces the second opening to reduce the diameter with a force greater than the force of the first elastic band. Accordingly, the first side-part comes into press-contact with the outside side wall of the tire and the second side-part comes into press-contact with the inside side wall of the tire. Hence, the first side-part and the second side-part hardly expand due to a centrifugal force applied to the first side-part and the second side-part while the tire rotates and the anti-skid device seldom comes off the tire.

The anti-skid device has the first elastic band that is provided to the first side-part and forces the first opening to reduce the diameter, the second elastic band that is provided to the second side-part and forces the second opening to reduce the diameter with a force greater than the force of the first elastic band, and the strap that runs across the first opening at the center and is connected to the first side-part at the both ends. The anti-skid device is therefore forced to move toward the inside by the second elastic band having the greater diameter reducing force until the movement is inhibited by the strap. Hence, by setting the strap a little longer, the anti-skid device can be adapted to tires of various sizes.

### Brief Description of Drawings

[Fig. 1] Fig. 1 is a cross section taken along the line I-I of Fig. 2 to show an inventive part of a vehicle tire anti-skid device according to one embodiment.
[Fig. 2] Fig. 2 is a perspective view of a tire together with the vehicle tire anti-skid device shown in Fig. 1 attached to the tire when viewed from the inside of the tire.
[Fig. 3] Fig. 3 is a view of the tire of Fig. 2 when viewed from the outside.
[Fig. 4] Fig. 4 is a top view of a textile of which an anti-skid part is made.
[Fig. 5] Fig. 5 is a cross section taken along the line V-V of Fig. 4.
[Fig. 6] Fig. 6 is a view used to describe in which manner a first inelastic strap, a second inelastic strap, and an elastic strap of Fig. 1 are fit.
[Fig. 7] Fig. 7 is a view used to describe a state in an initial stage when the vehicle tire anti-skid device is attached to a vehicle tire.
[Fig. 8] Fig. 8 is a view used to describe another embodiment.

### Description of Embodiments

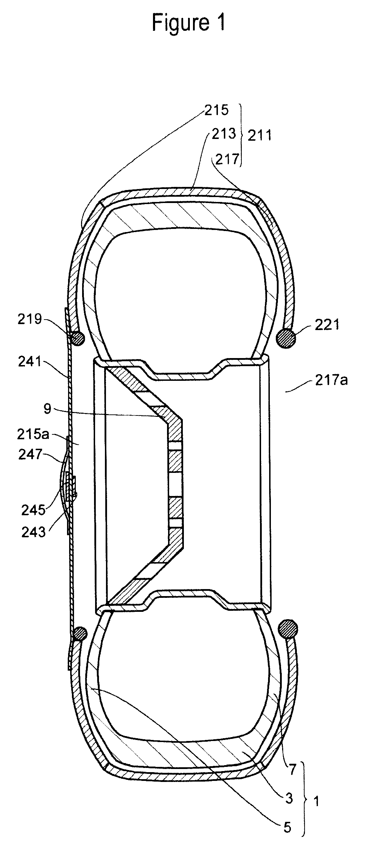

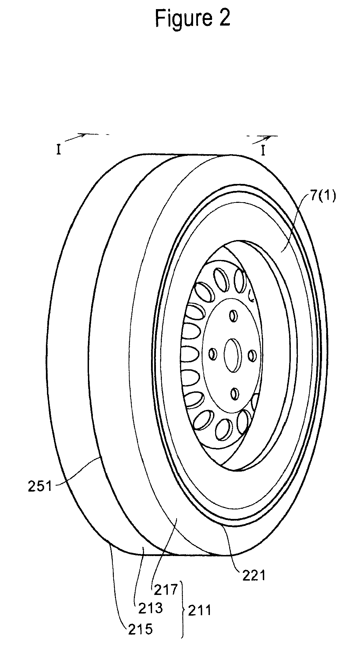

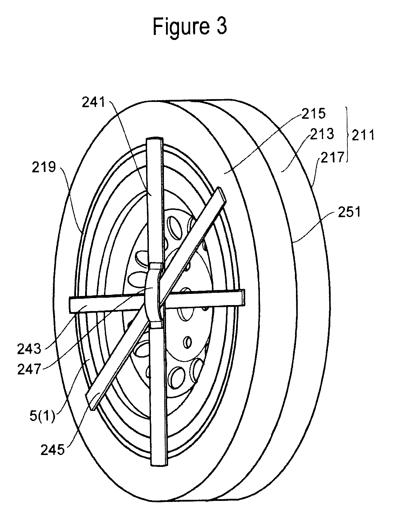

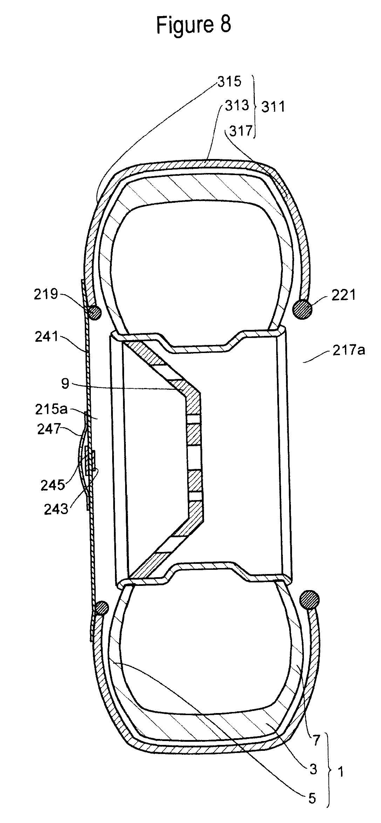

A vehicle tire anti-skid device of this embodiment will be described using the drawings. Fig. 1 is a cross section taken along the line I-I of Fig. 2 to show an inventive part of the vehicle tire anti-skid device of this embodiment. Fig. 2 is a perspective view of a tire together with the vehicle tire anti-skid device shown in Fig. 1 attached to the tire when viewed from the inside of the tire. Fig. 3 is a view of the tire of Fig. 2 when viewed from the outside. In cross sections of Fig. 1, and Fig. 8, a space is provided between the anti-skid device and the tire for ease of understanding and to make a structure of the anti-skid device easy to understand. In practical use, however, at least a tread of the tire and the anti-skid device are in contact with each other.

As are shown in Fig. 1 through Fig. 3, a tire 1 installed to a wheel 9 has a tread 3 that comes in contact with a road surface, a first side wall 5 which is an outside side surface of the tire 1, and a second side wall 7 which is an inside side surface of the tire 1.

An anti-skid device 211 of this embodiment is roughly formed of an anti-skid part 213, a first side-part 215, and a second side-part 217. The anti-skid part 213 is made of a textile and covers the tread 3 of the tire 1. The first side-part 215 is made of a textile different from the textile of which the anti-skid part 213 is made and connected to the anti-skid part 213 by stitching along an edge in a circumferential direction so as to oppose the first side wall 5 of the tire 1 on the outside. The second side-part 217 is made of a textile different from the textile of which the anti-skid part 213 is made and connected to the anti-skid part 213 by stitching along an edge in the circumferential direction so as to oppose the second side wall 7 of the tire 1 on the inside.

The first side-part 215 and the second side-part 217 are of an identical shape and made of a same material. More specifically, the both are of an annular shape, and the former is provided with a first opening 215a at the center, and the latter is provided with a second opening 217a at the center.

Further, a first elastic band 219 made of rubber and having substantially a circular cross section is attached to the first side-part 215 along the first opening 215a, and a second elastic band 221 made of rubber and having elasticity is attached to the second side-part 217 along the second opening 217a.

The first elastic band 219 is set so as to force the first opening 215a to shrink in a radial direction (to reduce a diameter) using its own restoring force when the anti-skid device 211 is attached to the tire 1. Likewise, the second elastic band 221 is set so as to force the second opening 217a to shrink in a radial direction (to reduce a diameter) using its own restoring force when the anti-skid device 211 is attached to the tire 1.

Furthermore, the force of the second elastic band 221 to reduce the diameter of the second opening 217a is set to be greater than the force of the first elastic band 219 to reduce the diameter of the first opening 215a.

A length in the circumferential direction of the anti-skid part 213 when unattached to the tire 1 is set to be shorter than a length in the circumferential direction of the tread 3 of the tire 1.

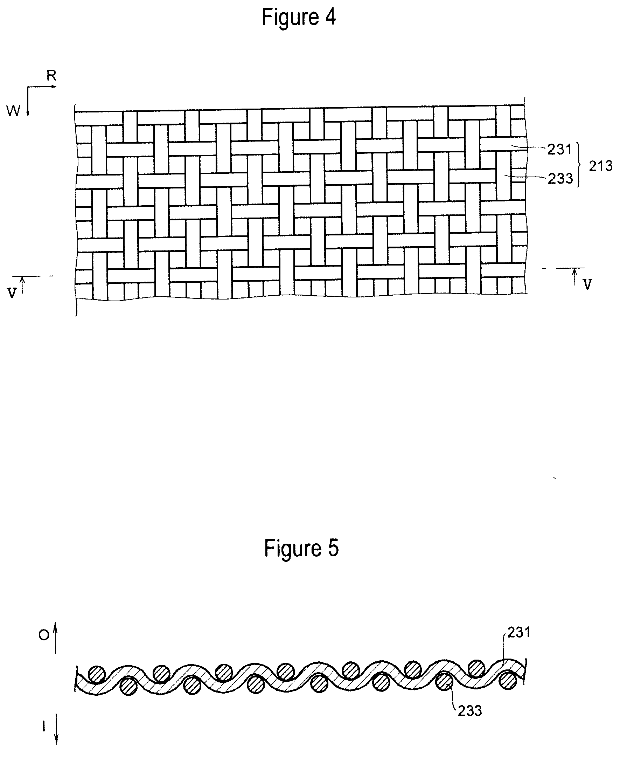

The anti-skid part 213 will now be described using Fig. 4 and Fig. 5. Fig. 4 is a top view of a textile of which the anti-skid part is made and Fig. 5 is a cross section taken along the line V-V of Fig. 4.

In Fig. 4, a direction indicated by an arrow R is the circumferential direction of the tire 1 and a direction indicated by an arrow W is a width direction. In Fig. 5, a side indicated by an arrow O is a road surface side and a side indicated by an arrow I is a tire surface side. The anti-skid part 213 is made of a textile formed by combining a vertical thread 231 that follows the circumferential direction of the tire 1 and is made of rubber fibers and thereby has elasticity and a horizontal thread 233 that follows the width direction of the tire 1 and has little elasticity.

In this embodiment, the first side-part 215 and the second side-part 217 are made of a textile formed by combining a vertical thread that follows the circumferential direction of the tire 1 and has elasticity and a horizontal thread that follows the width direction of the tire 1 and has substantially no elasticity.

The elasticity of the vertical thread of the first side-part 215 and the second side-part 217 is set for the circumferential-direction elasticity of the first side-part 215 and the second side-part 217 to be smaller than the circumferential-direction elasticity of the anti-skid part 213.

As are shown in Fig. 1 and Fig. 3, the first opening 215a of the first side-part 215 is provided with a first inelastic strap 241 and a second inelastic strap 243, both of which extend in a radial direction to run across the first opening 215a and are connected to the first side-part 215 at respective both ends in such a manner so as to orthogonally cross at a center of the first opening 215a.

In this embodiment, a length of the first inelastic strap 241 and a length of the second inelastic strap 243 over the first opening 215a are set to a same length.

Further, the first inelastic strap 241 is overlaid on the second inelastic strap 243 and crossover parts of the first inelastic strap 241 and the second inelastic strap 243 are joined together by stitching with yarn.

Furthermore, an elastic strap 245 is provided so as to press the first inelastic strap 241 and the second inelastic strap 243 from the outside. The elastic strap 245 also runs across the first opening 215a and is connected to the first side-part 215 at both ends. When the vehicle tire anti-skid device 211 of this embodiment is attached to the tire 1, the elastic strap 245 undergoes elastic deformation and presses the first inelastic strap 241 and the second inelastic strap 243 from the outside with its own elastic restoring force.

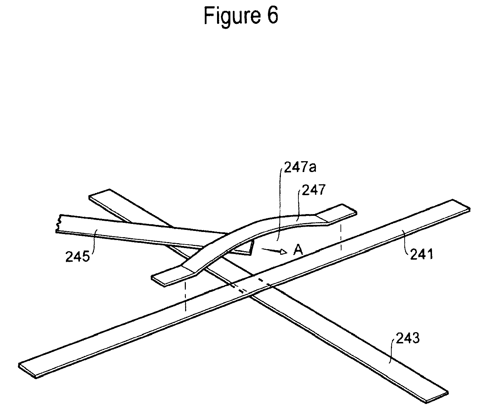

As is shown in Fig. 6, a strap loop 247 that defines a through-hole 247a for the elastic strap 245 to pass through in a direction indicated by an arrow A is provided to an intermediate part of the second inelastic strap 241 which is an inelastic strap in contact with the elastic strap 245. The elastic strap 245 is inserted through the through-hole 247a. The strap loop 247 therefore functions as a guide that inhibits the elastic strap 245 from moving away from the first inelastic strap 241.

In this embodiment, the anti-skid part 213 is further provided with a center line 251 that follows the circumferential direction and indicates a center in the width direction.

Owing to the configuration as above, the advantageous effects as follows can be achieved.

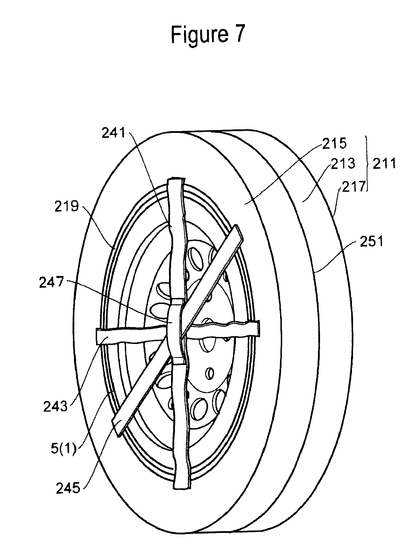

(1) The anti-skid part 213 is made of a textile formed by combining the vertical thread 231 that follows the circumferential direction of the tire 1 and the horizontal thread 233 that follows the width direction of the tire 1. The anti-skid part 213 can be therefore formed using a commonly-used knitting machine. Hence, the cost can be lower.
(2) The circumferential-direction length of the anti-skid part 213 when unattached to the tire 1 is set to be shorter than the circumferential-direction length of the tread 3 of the tire 1. Hence, no wrinkles are formed in the anti-skid part 213 and the anti-skid part 213 does not break due to wrinkles that are beaten against the road surface while the tire 1 rotates.
(3) The anti-skid part 213 is made of a textile formed by combining the vertical thread 231 that follows the circumferential direction of the tire 1 and has elasticity and the horizontal thread 233 that follows the width direction of the tire 1. Hence, by setting the elasticity of the vertical thread 231 adequately, the anti-skid device 211 can be quite easy to attach to the tire 1 and detach from the tire 1.
(4) The anti-skid part 213 is made of a textile formed by combining the vertical thread 231 that has elasticity and the horizontal thread 233 that follows the width direction of the tire 1. Accordingly, the structure is simple and a mass per unit area is low. Hence, the anti-skid part 213 hardly expands due to a centrifugal force applied to the anti-skid part while the tire 1 rotates and the anti-skid device 211 seldom comes off the tire 1.
(5) The anti-skid part 213 is made of a textile formed by combining the vertical thread 231 that is made of rubber fibers and thereby has elasticity and the horizontal thread 233 that follows the width direction of the tire 1. Hence, as is shown in Fig. 5, the anti-skid part 213 has an area in which the vertical thread 231 made of rubber fibers is exposed to the road surface side O. The presence of this area can enhance durability.
(6) The anti-skid part 213 is made of a textile formed by combining the vertical thread 231 that is made of rubber fibers and thereby has elasticity and the horizontal thread 233 that follows the width direction of the tire 1. Hence, as is shown in Fig. 5, the surface on the road surface side (contact surface) O is of a concavo-convex shape. Accordingly, moisture on the road surface is absorbed into the vertical thread 231 and the horizontal thread 233 or collected in a concave part, and splashed backward by the centrifugal force while the tire 1 rotates. Hence, moisture can be drained satisfactorily.
(7) The anti-skid part 213 is made of a textile formed by combining the vertical thread 231 that is made of rubber fibers and thereby has elasticity and the horizontal thread 233 that follows the width direction of the tire 1. Hence, as is shown in Fig. 5, on the surface on the road surface side (contact surface) O, the anti-skid part 213 has an area in which the vertical thread 231 made of rubber fibers is exposed. Owing to the presence of this area, a skid hardly occurs between the anti-skid device 211 and the road surface.
(8) The anti-skid part 213 is made of a textile formed by combining the vertical thread 231 that is made of rubber fibers and thereby has elasticity and the horizontal thread 233 that follows the width direction of the tire 1. Hence, as is shown in Fig. 5, the anti-skid part 213 has an area in which the vertical thread 231 made of rubber fibers is exposed also on the surface in contact with the tread 3 of the tire 1. Owing to the presence of this area, a skid hardly occurs between the anti-skid device 211 and the tire 1.
(9) The anti-skid part 213 is made of a textile formed by combining the vertical thread 231 that follows the circumferential direction of the tire 1 and is made of rubber fibers and thereby has elasticity and the horizontal thread 233 that follows the width direction of the tire 1 and has far smaller elasticity than the vertical thread 231. Hence, when attached to the tire 1, the anti-skid part 213 becomes so stable in the width direction of the tire 1 that the anti-skid device 211 does not come off the tire 1.
(10) The anti-skid device 211 has the first elastic band 219 that is provided to the first side-part 215 and forces the first opening 215a to reduce the diameter, the second elastic band 221 that is provided to the second side-part 217 and forces the second opening 217a to reduce the diameter with a force greater than the force of the first elastic band 219, and the first inelastic strap 241 and the second inelastic strap 243 that run across the first opening 215a at the respective centers and are connected to the first side-part 215 at the respective both ends. The anti-skid device 211 is therefore forced to move toward the inside by the second elastic band 221 having the greater diameter reducing force until the movement is inhibited by the first inelastic strap 241 and the second inelastic strap 243. Hence, by setting the first inelastic strap 241 and the second inelastic strap 243 a little longer, the anti-skid device 211 can be adapted to tires of various sizes.
(11) As is shown in Fig. 7, in an initial stage when the vehicle tire anti-skid device 211 is attached to the tire 1 while the movement of the vehicle tire anti-skid device 211 toward the inside is not inhibited by the first inelastic strap 241 and the second inelastic strap 243, the first inelastic strap 241 and the second inelastic strap 243 are more than long enough in the radial direction (longitudinal direction) and wrinkles are formed. However, the crossover parts of the first inelastic strap 241 and the second inelastic strap 243 are pressed by the elastic strap 245. Hence, the first inelastic strap 241 and the second inelastic strap 243 are prevented from making an abnormal noise by hitting the wheel 9 due to a centrifugal force induced by rotation of the tire 1 and a force in a lateral direction (lateral G) applied when the vehicle corners.
(12) The strap loop 247 in which to insert the elastic strap 245 is provided to the intermediate part of the first inelastic strap 241 and the first inelastic strap 241 and the second inelastic strap 243 are joined together at the crossover parts. Consequently, the elastic strap 245, the first inelastic strap 241, and the second inelastic strap 243 are formed into one piece at the intermediate part. The crossover parts of the first inelastic strap 241 and the second inelastic strap 243 are therefore pressed by the elastic strap 245. Hence, the first inelastic strap 241 and the second inelastic strap 243 are prevented from making an abnormal noise by hitting the wheel 9 due to a centrifugal force induced by rotation of the tire 1 and a force in a lateral direction (lateral G) applied when the vehicle corners.
(13) The elasticity of the vertical thread of the first side-part 215 and the second side-part 217 is set for the circumferential-direction elasticity of the first side-part 215 and the second side-part 217 to be smaller than the circumferential-direction elasticity of the anti-skid part 213. Hence, the anti-skid device 211 becomes easy to attach to the tire 1.
(14) The anti-skid part 213 is made of a textile formed by combining the vertical thread 231 that follows the circumferential direction of the tire 1 and is made of rubber fibers and thereby has elasticity and the horizontal thread 233 that follows the width direction of the tire 1 and has far smaller elasticity than the vertical thread 231. Also, the first side-part 215 and the second side-part 217 are of an identical shape, made of a same material, and formed in an annular shape having an opening at the center. The first side-part 215 and the second side-part 217 are made of a textile formed by combining a vertical thread that follows the circumferential direction of the tire 1 and has elasticity and a horizontal thread that follows the width direction of the tire and has far smaller elasticity than the vertical thread. Hence, the anti-skid device 211 can be adapted to tires of various sizes.
   In addition, the entire anti-skid device 211 can tighten the tire 1 homogeneously at a high torque and air and snow are not allowed to enter into a space between the tire 1 and the anti-skid device 211. Hence, the occurrence of coming off of the anti-skid device from the tire 1 and an idling skid caused by expansion of the anti-skid device 211 can be eliminated.
(15) The first opening 215a of the first side-part 215 is provided with the first inelastic strap 241 and the second inelastic strap 243 that extend in the radial direction to run across the first opening 215a and are connected to the first side-part 215 at the respective both ends. Hence, the anti-skid device 211 is prevented from becoming out of alignment in the width direction of the tire 1.
(16) In a case where the first side-part 215 and the second side-part 217 have elasticity in the radial direction, the first side-part 215 and the second side-part 217 stretch in the radial direction when the anti-skid device 211 is detached from the tire 1 and make the detachment difficult. In contrast, the first side-part 215 and the second side-part 217 of this embodiment have substantially no elasticity in the radial direction. Hence, the anti-skid device 211 is easy to detach from the tire 1.
(17) The first side-part 215 and the second side-part 217 are of an identical shape, made of a same material, and formed in an annular shape having an opening at the center. Hence, productivity can be increased.
(18) The anti-skid part 213 is provided with the center line 251 that follows the circumferential direction and indicates the center in the width direction. Hence, the center line 251 is used as a guide at the time of attachment and ease of attachment can be increased.

It should be understood that the invention is not limited to the embodiment described above. In the embodiment above, each of the anti-skid part 213, the first side-part 215, and the second side-part 217 forming the anti-skid device 211 is made of a separate textile. However, as is shown in Fig. 8, an anti-skid part 313, a first side-part 315, and a second side-part 317 of the anti-skid device 211 may be made of a piece of textile.

When configured in this manner, the need to connect the first side-part 315 and the second side-part 317 by stitching can be eliminated and workability can be enhanced.

In addition, all the parts function as the anti-skid part. Hence, a product applicable range in the tire width direction can be broader and the management becomes easy because the part numbers of the product are reduced.

### Reference Signs List

- 1:: tire
- 3:: tread
- 5 and 7:: side walls
- 213:: anti-skid part
- 215:: first side-part
- 217:: second side-part
- 219:: first elastic band
- 221:: second elastic band
- 241:: first inelastic strap
- 243:: second inelastic strap

## Claims

1. A vehicle tire anti-skid device, comprising:
an anti-skid part that covers a tread of a tire;
a first side-part that is provided to the anti-skid part along an edge in a circumferential direction oppositely to an outside side wall of the tire and provided with a first opening at a center;
a second side-part that is provided to the anti-skid part along an edge in the circumferential direction oppositely to an inside side wall of the tire and provided with a second opening at a center;
a first elastic band that is provided to the first side-part and forces the first opening to reduce a diameter;
a second elastic band that is provided to the second side-part and forces the second opening to reduce a diameter with a force greater than a force of the first elastic band; and
an inelastic strap that runs across the first opening at a center and is connected to the first side-part at both ends,
the vehicle tire anti-skid device being **characterized in that**:
a length in the circumferential direction of the anti-skid part when unattached to the tire is set to be shorter than a length in the circumferential direction of the tread of the tire; and
the anti-skid part is made of a textile formed by combining a vertical thread that follows the circumferential direction of the tire and has elasticity and a horizontal thread that follows a width direction of the tire.

2. The vehicle tire anti-skid device according to claim 1, **characterized in that**:
the inelastic strap is formed of a first inelastic strap, and a second inelastic strap that is as long as the first inelastic strap over the first opening and orthogonally crosses the first inelastic strap at a center of the first opening; and
the first inelastic strap and the second inelastic strap are joined together in crossover parts.

3. The vehicle tire anti-skid device according to claim 2, **characterized in that**:
an elastic strap is provided;
the elastic strap runs across the first opening at a center and is connected to the first side-part at both ends; and
the elastic strap presses the crossover parts of the first inelastic strap and the second inelastic strap from an outside.

4. The vehicle tire anti-skid device according to claim 3, **characterized in that**:
the inelastic strap in contact with the elastic strap is provided with a guide that inhibits the elastic strap from moving away from the inelastic strap.

5. The vehicle tire anti-skid device according to claim 1, **characterized in that**:
the first side-part and the second side-part are made of a textile formed by combining a vertical thread that follows the circumferential direction of the tire and a horizontal thread that follows a radial direction of the tire, the vertical thread having elasticity.

6. The vehicle tire anti-skid device according to claim 1, **characterized in that**:
the first side-part and the second side-part are of an identical shape.

7. The vehicle tire anti-skid device according to claim 1, **characterized in that**:
the anti-skid part, the first side-part, and the second side-part are made of a piece of textile.

8. The vehicle tire anti-skid device according to claim 1, **characterized in that**:
each of the anti-skid part, the first side-part, and the second-side part is made of a separate textile.

9. The vehicle tire anti-skid device according to claim 1, **characterized in that**:
the anti-skid part is provided with a center line that indicates a center of the width direction in such a manner so as to follow the circumferential direction.
